# EUROPEAN PATENT APPLICATION

(11) **EP 4 567 955 A1**
(43) Date of publication of application: **11.06.2025**
(21) Application number: 23915253.1
(22) Date of filing: 09.01.2023
(51) Int. Cl.: H01M 10/058

(54) **BATTERY, AND ELECTRIC DEVICE HAVING SAME**

(71) Applicant: Contemporary Amperex Technology (Hong Kong) Limited, Central, Hong Kong (CN)
(72) Inventor: QIN, Yiming, Ningde, Fujian 352100 (CN); SUN, Jingxuan, Ningde, Fujian 352100 (CN); XU, Xiaofu, Ningde, Fujian 352100 (CN); SHANG, Yibo, Ningde, Fujian 352100 (CN); PAN, Jianfu, Ningde, Fujian 352100 (CN); LIU, Qian, Ningde, Fujian 352100 (CN); YE, Yonghuang, Ningde, Fujian 352100 (CN)
(74) Representative: Jacob, Reuben Ellis
(86) International application number: PCT/CN2023/071399
(87) International publication number: WO 2024/148472

(57) **Abstract**

Provided in the present application are a battery, and an electric device having same. The battery comprises: a first battery cell, which comprises a first positive-electrode material, and a second battery cell, which comprises a second positive-electrode material, wherein the first battery cell and the second battery cell are connected in parallel to form the battery, the first positive-electrode material comprises a ternary material, and the second positive-electrode material comprises a lithium-containing phosphate.

## Description

### TECHNICAL FIELD

The present application relates to the technical field of a battery and in particular, to a battery and an electrical device with the battery.

### BACKGROUND

After a ternary material and a lithium-manganese material are mixed together, because these two materials are used at different voltages and have different material properties, various processing problems such as gelling, a clogged filter element, and poor particle dispersion may occur after these two materials are mixed to be used together, which affects the energy density and service life of batteries.

Therefore, current batteries still need to be further improved.

### SUMMARY

The present application aims to solve, at least to some extent, one of the technical problems in the related art.

In one aspect of the present application, provided is a battery, including: a first battery cell, where the first battery cell includes a first positive electrode plate, the first positive electrode plate includes a first positive active layer, and the first positive active layer includes a first positive electrode material; and a second battery cell, where the second battery cell includes a second positive electrode plate, the second positive electrode plate includes a second positive active layer, and the second positive active layer includes a second positive electrode material. The first battery cell and the second battery cell are connected in parallel. The first positive electrode material includes a ternary material. The second positive electrode material includes a lithium-containing phosphate. Therefore, the cycle life of the battery is prolonged, and the energy density of the battery is improved.

According to some embodiments of the present application, a quantity of first battery cells is x1. A quantity of second battery cells is x2. The first positive electrode plate of each of the first battery cells has a gram capacity of a mA·h/g. The second positive electrode plate of each of the second battery cells has a gram capacity of b mA·h/g. 0.1 ≤ (b/a)²(x2/x1) ≤ 10 is satisfied.

According to some embodiments of the present application, 0.1 ≤ x1/x2 ≤ 10.

According to some embodiments of the present application, 150 mA-h/g ≤ a ≤ 230 mA·h/g; and/or 100 mA-h/g ≤ b ≤ 160 mA-h/g.

According to some embodiments of the present application, the lithium-containing phosphate includes Liₐ₁A_{b1}MP_{1-c1}C_{c1}O_{4-d1}D_{d1}, where A includes one or more elements of IA group elements, M includes at least one of a VIIB element and a dopant element of the VIIB element, C includes one or more of a IIIA element, a IVA element, a VA element and a VIA element, D includes one or more of a VIA element and a VIIA element, a1 is selected from a range of 0.9 to 1.1, b1 is selected from a range of 0 to 0.1, c1 is selected from a range of 0 to 0.1, and d1 is selected from a range of 0 to 0.1.

According to some embodiments of the present application, the lithium-containing phosphate includes Liₐ₁A_{b1}Mn₁₋ₑ₁Eₑ₁P_{1-c1}C_{c1}O_{4-d1}D_{d1}, where A includes one or more of Zn, Al, Na, K, Mg, Nb, Mo, and W, E includes one or more of Zn, Al, Na, K, Mg, Mo, W, Ti, V, Zr, Fe, Ni, Mg, Co, Ga, Sn, Sb, Nb, and Ge, C includes one or more of B (boron), S, Si, and N, D includes one or more of S, F, Cl, and Br, a1 is selected from any value in a range of 0.9 to 1.1, b1 is selected from any value in a range of 0 to 0.100, c1 is selected from any value in a range of 0.001 to 0.100, d1 is selected from any value in a range of 0.001 to 0.1, and e1 is selected from any value in a range of 0.001 to 0.5.

According to some embodiments of the present application, the lithium-containing phosphate includes Li₁₊ₓMn₁₋ₑ₁Eₑ₁P_{1-c1}C_{c1}O₄, where 1 + x = a1, x is any value in a range of -0.100 to 0.100, e1 is any value in a range of 0.001 to 0.500, c1 is any value in a range of 0.001 to 0.100, E includes one or more elements selected from Zn, Al, Na, K, Mg, Mo, W, Ti, V, Zr, Fe, Ni, Mg, Co, Ga, Sn, Sb, Nb, and Ge, and C includes one or more elements selected from B (boron), S, Si, and N.

According to some embodiments of the present application, the second positive electrode material includes an internal core and a case wrapping at least part of the surface of the internal core. The internal core includes the lithium-containing phosphate.

According to some embodiments of the present application, the ternary material is Liₐ₂Ni_{b2}Co_{c2}M1_{d2}M2ₑ₂O_{f2}R'_{g2}, where 0.75 ≤ a2 ≤ 1.2, 0 < b2 < 1, 0 < c2 < 1, 0 < d2 < 1, 0 ≤ e2 ≤ 0.2, 1 ≤ f2 ≤ 2.5, 0 ≤ g2 ≤ 1, and f2 + g2 ≤ 3, M1 includes Mn and/or Al, M2 includes at least one of Zr, Zn, Cu, Cr, Mg, Fe, V, Ti, Sr, Sb, Y, W, and Nb, and R' includes at least one of N, F, S, and Cl.

According to some embodiments of the present application, the ternary material includes at least one of a lithium nickel cobalt aluminum oxide and a lithium nickel cobalt manganese oxide.

According to some embodiments of the present application, based on total mass of the first positive electrode plate, by a mass percentage, Ni is 30% to 99.5%, and Co is 3% to 49.5%.

According to some embodiments of the present application, the ternary material is a monocrystalline. The monocrystalline has a particle diameter of 0.2 µm ≤ Dᵥ50 ≤ 10 µm and Dᵥ99 ≤ 18 µm.

According to some embodiments of the present application, the ternary material is secondary particles formed by agglomeration of primary particles. The primary particles have a particle diameter of 50 nm to 800 nm. The secondary particles have a particle diameter of 4 µm ≤ Dᵥ50 ≤ 13 µm and Dᵥ99 ≤ 30 µm.

According to some embodiments of the present application, the ternary material has a BET of 0.4 to 1.5 m²/g.

According to some embodiments of the present application, the second positive electrode material is a monocrystalline. The second positive electrode material has a particle diameter of 50 nm to 1000 nm.

According to some embodiments of the present application, the second positive electrode material is secondary particles formed by agglomeration of primary particles. The secondary particles have a particle diameter of 0.8 µm ≤ Dᵥ50 ≤ 4.2 µm and Dᵥ99 ≤ 30 µm.

According to some embodiments of the present application, the second positive electrode material has a BET of 8 to 20 m²/g.

In another aspect of the present application, provided is an electrical device, including the above battery. Therefore, the electrical device has all features and advantages of the above battery, which are not repeated herein. In general, the electrical device has at least the advantage of high energy density.

### BRIEF DESCRIPTION OF DRAWINGS

The above and/or additional aspects and advantages of the present application will become apparent and readily understood from the description of embodiments in conjunction with the following accompanying drawings:
FIG. 1 shows a schematic diagram of an arrangement manner of battery cells inside a battery according to an embodiment of the present application.
FIG. 2 shows a schematic diagram of an arrangement manner of battery cells inside a battery according to another embodiment of the present application.
FIG. 3 shows a schematic diagram of an arrangement manner of battery cells inside a battery according to another embodiment of the present application.

### List of reference numerals:

1000: battery; 1100: first battery cell; 1200: second battery cell.

### DETAILED DESCRIPTION OF EMBODIMENTS

Embodiments of the present application are described in detail below. The embodiments described below are exemplary, and are only used to explain the present application, and should not be construed as limiting the present application. If specific techniques or conditions are not indicated in the embodiments, procedures shall be carried out in accordance with techniques or conditions described in literatures in the art or in accordance with a product specification. A reagent or an instrument used without a manufacturer's indication is a conventional product that can be purchased commercially.

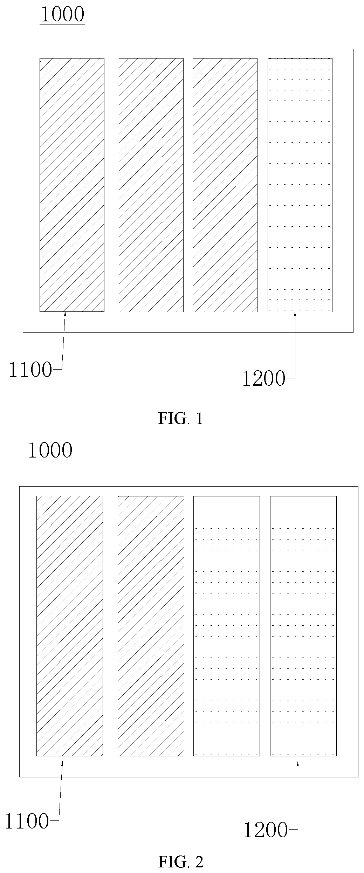

In one aspect of the present application, provided isa battery 1000. Referring to FIGS. 1 to 3, the battery 1000 includes a first battery cell 1100 and a second battery cell 1200. The first battery cell 1100 and the second battery cell 1200 are connected in parallel. The first battery cell 1100 includes a first positive electrode plate, a first negative electrode plate, a first separator, and a first electrolyte solution. The first positive electrode plate includes a first positive active layer. The first positive active layer includes a first positive electrode material. The first positive electrode material includes a ternary material. The second battery cell 1200 includes a second positive electrode plate, a second negative electrode plate, a second separator, and a second electrolyte solution. The second positive electrode plate includes a second positive active layer. The second positive active layer includes a second positive electrode material. The second positive electrode material includes a lithium-containing phosphate. Therefore, the first positive electrode plate and the first negative electrode plate form the first battery cell 1100, and the second positive electrode plate and the second negative electrode plate form the second battery cell 1200, which can avoid processing problems caused by direct mixing of the first positive electrode material and the second positive electrode material, prolong the cycle life of the battery 1000, and improve the energy density of the battery 1000.

The following is a detailed description of the principle by which the present application can realize the above beneficial effects:
The ternary material used as the positive active material has the advantage of a high energy density. However, a layered transition metal oxide has material losses such as phase change/Li-Ni mixing arrangement/release of an oxygen and a structural collapse in a cycling process, and has a shorter service life. A lithium-manganese material has the advantages of strong stability, good cycling stability, and a long service life, but has a lower energy density. Mixing the ternary material and the lithium-manganese material as the positive active material of the battery 1000 can give full play to the advantages of both of the ternary material and the lithium-manganese material. However, as previously mentioned, after the ternary material and the lithium-manganese material are mixed, because these two materials are used at different voltages and have different material properties, various processing problems such as gelling, a clogged filter element, and poor particle dispersion may occur after the two materials are mixed to be used together. The battery 1000 provided in the present application internally includes a plurality of first battery cells 1100 and a plurality of second battery cells 1200. The positive electrode material of the first battery cell 1100 includes the ternary material. The positive electrode material of the second battery cell 1200 includes the lithium manganese phosphate. The two materials are separately assembled into the battery cells and then assembled into the battery 1000. The two positive electrode materials do not need to be mixed, and the various processing problems such as the gelling, the clogged filter element, and the poor particle dispersion may be avoided. In addition, the positive active material in the battery 1000 includes both the ternary material and the lithium-containing phosphate material, which can improve the energy density of the battery 1000 and prolong the cycle life of the battery 1000.

According to some embodiments of the present application, a quantity of first battery cells 1100 is x1, and a quantity of second battery cells 1200 is x2. The first positive electrode plate of each of the first battery cells 1100 has a gram capacity of a mA·h/g. The second positive electrode plate of each of the second battery cells 1200 has a gram capacity of b mA·h/g. 0.1 ≤ (b/a)²(x2/x1) ≤ 10 is satisfied. Preferably, 0.3 ≤ (b/a)²(x2/x1) ≤ 3. Therefore, the safety of the battery cells is improved on the premise of ensuring the energy density of the battery cells.

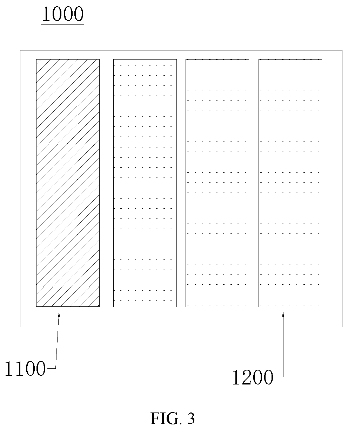

According to some embodiments of the present application, when the quantities of the first battery cell 1100 and the quantity of the second battery cell 1200 satisfy the above relationship, the specific quantity of the first battery cell 1100 and the specific quantity of the second battery cell 1200 are not limited. The quantity of the first battery cell 1100 may be more than that of the second battery cell 1200 (referring to FIG. 1); or the quantity of the first battery cell 1100 is the same as that of the second battery cell 1200 (referring to FIG. 2); or the quantity of the second battery cell 1200 is more than that of the first battery cell 1100 (referring to FIG. 3). Specifically, x1 and x2 satisfy: 0.1 ≤ x1/x2 ≤ 10, e.g., x1/x2 may be 1, 2, 3, 4, 5, 6, 7, 8, 9 and the like. Preferably, x1/x2 is 0.25 to 4. Thus, the energy density and the service life of the battery 1000 can be both considered.

Specifically, 150 mA-h/g ≤ a ≤ 230 mA-h/g, for example, a may be 160 mA-h/g, 170 mA·h/g, 180 mA·h/g, 190 mA·h/g, 200 mA·h/g, 210 mA·h/g, 220 mA-h/g and the like; and/or 100 mA-h/g ≤ b ≤ 160 mA-h/g, for example, b may be 110 mA·h/g, 120 mA-h/g, 130 mA-h/g, 140 mA·h/g, 150 mA·h/g and the like. Therefore, the energy density of the battery 1000 is further improved and the safety of the battery 1000 is improved.

The lithium-containing phosphate material of the present application is described in detail below:
According to some embodiments of the present application, the lithium-containing phosphate includes Liₐ₁A_{b1}MP_{1-c1}C_{c1}O_{4-d1}D_{d1}, where A includes one or more elements of IA group elements, M includes at least one of a VIIB element and a dopant element of the VIIB element, C includes one or more of a IIIA element, a IVA element, a VA element and a VIA element, D includes one or more of a VIA element and a VIIA element, a1 is selected from a range of 0.9 to 1.1, b1 is selected from a range of 0 to 0.1, c1 is selected from a range of 0 to 0.1, and d1 is selected from a range of 0 to 0.1.

Further, the lithium-containing phosphate includes Liₐ₁A_{b1}Mn₁₋ₑ₁Eₑ₁P_{1-c1}C_{c1}O_{4-d1}D_{d1}, where A includes one or more of Zn, Al, Na, K, Mg, Nb, Mo, and W, E includes one or more of Zn, Al, Na, K, Mg, Mo, W, Ti, V, Zr, Fe, Ni, Mg, Co, Ga, Sn, Sb, Nb, and Ge, C includes one or more of B (boron), S, Si, and N, D includes one or more of S, F, Cl, and Br, a1 is selected from any value in a range of 0.9 to 1.1, b1 is selected from any value in a range of 0 to 0.100, c1 is selected from any value in a range of 0.001 to 0.100, d1 is selected from any value in a range of 0.001 to 0.1, and e1 is selected from any value in a range of 0.001 to 0.5. Therefore, for the present application, specific elements are simultaneously doped in specific amounts at Li, Mn, P, and O sites of a compound LiMnPO₄, which can obtain significantly improved rate performance while significantly reducing the leaching of doped elements at Mn and Mn sites, thereby obtaining significantly improved cycling performance and/or high-temperature stability. Further, the gram capacity and the compaction density of the material can also be improved.

Still further, the lithium-containing phosphate includes Li₁₊ₓMn₁₋ₑ₁Eₑ₁P_{1-c1}C_{c1}O₄, where 1 + x = a1, x is any value in a range of -0.100 to 0.100, e1 is any value in a range of 0.001 to 0.500, c1 is any value in a range of 0.001 to 0.100, E includes one or more elements selected from Zn, Al, Na, K, Mg, Mo, W, Ti, V, Zr, Fe, Ni, Mg, Co, Ga, Sn, Sb, Nb, and Ge, and C includes one or more elements selected from B (boron), S, Si, and N.

According to some embodiments of the present application, the second positive electrode material includes an internal core and a case wrapping at least part of the surface of the internal core. The internal core includes the lithium-containing phosphate. Specifically, the case includes a first cladding layer wrapping the internal core and a second cladding layer wrapping the first cladding layer. The first cladding layer includes a pyrophosphate WP₂O₇ and a phosphate XPO₄, where W and X are each independently selected from one or more of Li, Fe, Ni, Mg, Co, Cu, Zn, Ti, Ag, Zr, Nb, or Al. The second cladding layer includes carbon.

Therefore, the second positive active material of the present application is able to improve the gram capacity, cycling performance, and safety performance of the battery. Although a mechanism is not clear, it is presumed that the second positive active material of the present application is of a core-case structure. An element E and an element C are doped at the manganese and phosphorus sites of a lithium manganese phosphate internal core, respectively, which can effectively reduce the leaching of manganese, thereby reducing the manganese ions migrating to a negative electrode. Further, the electrolyte solution consumed due to the decomposition of an SEI film is reduced, thereby improving the cycling performance and the safety performance of the battery, promoting the adjustment of a Mn-O bond, reducing the migration barrier of lithium ions, promoting the migration of lithium ions, and improving the rate performance of the battery. The first cladding layer including the pyrophosphate and the phosphate wraps the internal core, which can further increase the migration resistance of manganese, reduce the leaching of manganese, reduce the content of heterolithium on a surface, and reduce contact between the internal core and the electrolyte solution, thereby reducing an interfacial side reaction, reducing gas production, and improving the high-temperature storage performance, cycling performance and safety performance of the battery. A carbon-containing layer as the second cladding layer is used for wrapping, which can further improve the safety and kinetic performance of the battery.

The ternary material of the present application is described in detail below:
According to some embodiments of the present application, the ternary material is Liₐ₂Ni_{b2}Co_{c2}M1_{d2}M2ₑ₂O_{f2}R'_{g2}, where 0.75 ≤ a2 ≤ 1.2, 0 < b2 < 1, 0 < c2 < 1, 0 < d2 < 1, 0 ≤ e2 ≤ 0.2, 1 ≤ f2 ≤ 2.5, 0 ≤ g2 ≤ 1, f2 + g2 ≤ 3, M1 includes Mn and/or Al, M2 includes at least one of Zr, Zn, Cu, Cr, Mg, Fe, V, Ti, Sr, Sb, Y, W, and Nb, and R' includes at least one of N, F, S, and Cl.

Specifically, the ternary material includes at least one of a lithium nickel cobalt aluminum oxide and a lithium nickel cobalt manganese oxide.

According to some embodiments of the present application, based on the total mass of the ternary material, by a mass percentage, the content of Ni may be 30% to 99.5%, and the content of Co may be 3% to 49.5%. Further, the content of Ni may be 60% to 88%, and the content of Co may be 5% to 35%. Therefore, the energy density of the battery 1000 can be further improved by controlling the Ni content in the above range. The electronic conductivity and ionic conductivity of the ternary material can be further improved by controlling the Co content in the above range. The kinetic performance of the ternary material can be effectively improved.

According to some specific embodiments of the present application, the ternary material is a monocrystalline. The monocrystalline has a particle diameter of 0.2 µm ≤ Dᵥ50 ≤ 10 µm and Dᵥ99 ≤ 18 µm. Therefore, the ternary material has a smaller particle diameter, which is conducive to shortening a lithium ion diffusion path and a bulk phase diffusion impedance, reducing the polarization of the material, and improving the energy density of the battery 1000.

When the material has a smaller particle diameter, the surface energy is larger, and agglomeration between the particles is easy to occur through interaction. According to some specific embodiments of the present application, the ternary material may further be secondary particles formed by agglomeration of primary particles. The primary particles have a particle diameter of 50 nm to 800 nm. The secondary particles have a particle diameter of 4 µm ≤ Dᵥ50 ≤ 13 µm and Dᵥ99 ≤ 30 µm. Therefore, the primary particles inside the secondary particles have a smaller particle diameter, which can further shorten a lithium ion diffusion path and a bulk phase diffusion impedance, reduce the polarization of the material, and improve the energy density of the battery 1000.

According to some specific embodiments of the present application, the ternary material has a BET of 0.4 to 1.5 m²/g. That is, when the ternary material is monocrystalline particles or the secondary particles, the BET of the ternary material is between 0.4 m²/g and 1.5 m²/g, which may be, for example, 0.6 m²/g, 0.8 m²/g, 1.0 m²/g, 1.2 m²/g, 1.4 m²/g and the like. Therefore, the compactness of the ternary material is controlled to avoid poor compaction when the ternary material is of a core-case structure or a hollow material, which results in a low overall compaction of a hybrid system and reduces the energy density.

Similarly, according to some specific embodiments of the present application, the second positive electrode material may also be a monocrystalline, and the second positive electrode material has a particle diameter of 50 nm to 1000 nm, for example, the particle diameter may be 100 nm, 200 nm, 300 nm, 400 nm, 500 nm, 600 nm, 700 nm, 800 nm, 900 nm, and the like. Therefore, the second positive electrode material has a smaller particle diameter, which is conducive to shortening the lithium ion diffusion path and the bulk phase diffusion impedance of the second positive electrode material, reducing the polarization of the material, and improving the energy density of the battery 1000.

According to some specific embodiments of the present application, the second positive electrode material may also be secondary particles formed by agglomeration of primary particles. The secondary particles have a particle diameter of 0.8 µm ≤ Dᵥ50 ≤ 4.2 µm and Dᵥ99 ≤ 30 µm. Therefore, the lithium ion diffusion path and the bulk phase diffusion impedance can be further shortened. The polarization of the material can be reduced. The energy density of the battery 1000 can be improved.

According to some embodiments of the present application, the second positive electrode material has a BET of 8 to 20 m²/g. Therefore, the compactness of the secondary particles is controlled to prevent poor compactness of a part of the core-case structure and the hollow material from resulting in a low overall compactness of the material, and improve the energy density of the battery 1000.

According to some specific embodiments of the present application, the battery 1000 provided in the present application includes two battery cells. The negative electrode plate in the battery 1000 includes the first negative electrode plate and the second negative electrode plate. It should be noted that the first negative electrode plate and the second negative electrode plate may be the same or different. To allow the preparation process of the battery 1000 to be simpler, the same negative electrode plates may be used in different battery cells. Specifically, the negative electrode plate typically includes a negative current collector and a negative active layer disposed on the surface of the negative current collector. The negative active layer typically includes a negative active material. The negative active material may be a material of various negative active materials in the art suitable for an electrochemical energy storage device, for example, the material may include, but is not limited to, one or a combination of more of graphite, soft carbon, hard carbon, carbon fiber, mesocarbon microbeads, a silicon-based material, a tin-based material, lithium titanate, or other metals that can form an alloy with lithium. The graphite may be selected from one or a combination of more of artificial graphite, natural graphite, and modified graphite. The silicon-based material may be selected from one or a combination of more of a monatomic silicon, a silicon oxide, a silicon carbon complex, and a silicon alloy. The tin-based material may be selected from one or a combination of more of a monatomic tin, a tin oxide, and a tin alloy. The negative current collector is typically a structure or a part that collects an electric current. The negative current collector may be a variety of materials in the art suitable for use as a negative current collector of an electrochemical energy storage device, for example, the negative current collector may include, but is not limited to, metal foil, and more specifically may include, but is not be limited to, copper foil. In addition, the negative electrode plate may also be a lithium plate.

According to some embodiments of the present application, the compositions of the first electrolyte solution and the second electrolyte solution may be the same or different. The same electrolyte solutions may be used in different battery cells to allow the preparation process of the battery 1000 to be simpler. Specifically, when the battery 1000 is a lithium-ion battery 1000, a non-aqueous electrolyte solution is typically used. As the non-aqueous electrolyte solution, a lithium salt solution dissolved in an organic solvent is typically used. The lithium salt may be an inorganic lithium salt such as LiClO₄, LiPF₆, LiBF₄, LiAsF₆ and LiSbF₆, or an organic lithium salt such as LiCF₃SO₃, LiCF₃CO₂, Li₂C₂F₄(SO₃)₂, LiN(CF₃SO₂)₂, 9LiC(CF₃SO₂)₃, and LiCₙF₂ₙ₊₁SO₃(n≥2). An organic solvent used in the non-aqueous electrolyte solution may be a cyclic carbonate such as ethylene carbonate, propylene carbonate, butylene carbonate and vinylene carbonate, a chain carbonate such as dimethyl carbonate, diethyl carbonate, and methyl ethyl carbonate, a chain ester such as methyl propionate, a cyclic ester such as γ-butyrolactone, a chain ether such as dimethoxyethane, ether, diethylene glycol dimethyl ether and triethylene glycol dimethyl ether, a cyclic ether such as tetrahydrofuran and 2-methyltetrahydrofuran, nitrile such as acetonitrile and propionitrile, or mixtures of these solvents.

According to some embodiments of the present application, the compositions of the first separator and the second separator may be the same or different. The same separators may be used in different battery cells to allow the preparation process of the battery 1000 to be simpler. Specifically, the separators may be selected from a polyethylene film, a polypropylene film, a polyvinylidene fluoride film, and a multilayer composite film thereof.

In another aspect of the present application, provided is an electrical device, including the above battery 1000. Therefore, the electrical device has all features and advantages of the above battery 1000, which are not repeated herein. In general, the electrical device has at least the advantage of high energy density.

### 1. Preparation of positive electrode plates

A ternary material, conductive carbon, and a binder polyvinylidene difluoride (PVDF) are fully stirred and mixed in a weight ratio of 96:2:2 in an appropriate amount of N-methylpyrrolidone (abbreviated as NMP) solvent, so that a homogeneous positive electrode slurry is formed. The slurry is coated on a positive current collector Al foil. After the slurry is dried, the electrode plate is cold-pressed to a designed pressure density for slitting standby to obtain a first positive electrode plate.

A lithium iron phosphate, conductive carbon, and a binder polyvinylidene difluoride (PVDF) are fully stirred and mixed in a weight ratio of 95:3:2 in an appropriate amount of NMP solvent, so that a homogeneous positive electrode slurry is formed. The slurry is coated on a positive current collector Al foil. After the slurry is dried, the electrode plate is cold-pressed to a designed pressure density for slitting standby to obtain a second positive electrode plate.

### 2. Preparation of electrolyte solution

The electrolyte solution is prepared with 1 mol/L of LiPF₆/(ethylene carbonate (EC) + diethyl carbonate (DEC) + dimethyl carbonate (DMC)) (1:1:1 by volume ratio) + 5 wt% fluoroethylene carbonate (FEC).

### 3. Preparation of negative electrode plates

Graphite and conductive carbon as negative active materials, and a binder sodium carboxymethyl cellulose (CMC-Na) are fully stirred and mixed in a weight ratio of 95:3:2 in an appropriate amount of water solvent, so that a homogeneous negative electrode slurry is formed. The slurry is coated on a negative current collector Cu foil. After the slurry is dried, the electrode plate is cold-pressed to a designed pressure density for slitting standby.

### 4. Provision of separator

A PE film is selected as the separator.

### 5. Preparation of battery

With a conventional battery production process, a first battery cell: the first positive electrode plate (compaction density: 3.4 g/cm³), the separator and the negative electrode plate (compaction density: 1.6 g/cm³) are wound together to form a bare cell.

A second battery cell: the second positive electrode plate (compaction density: 2.4 g/cm³), the separator and the negative electrode plate (compaction density: 1.6 g/cm³) are wound together to form a bare cell. The first battery cell and the second battery cell are put into a battery housing, respectively, the electrolyte solution is injected, and then procedures such as sealing, and formation are performed to finally obtain a lithium-ion secondary battery (hereinafter referred to as the battery).

### Performance test method

### 1. Energy density test of battery

A capacity, a nominal voltage and mass of the secondary battery are tested, respectively. The mass energy density can be calculated by the following formula: mass energy density = capacity × voltage / mass. The mass can be weighed with a balance (e.g., a scale of JA31002), where the mass can be accurate to 0.1 g.

### 2. Test method for capacity and nominal voltage of secondary battery

At 25 °C, the secondary battery is fully charged and then fully discharged with a 0.33C charging and discharging multiplicity rate. A 3rd discharging capacity measured is the capacity of the secondary battery. A voltage corresponding to half of the discharged capacity is the nominal voltage. A test procedure is as follows: 1) Charging is performed at a 0.33C multiplicity rate constant current to an upper limit cut-off voltage. Then, charging is performed with a constant voltage until the current is <0.05C. 2) the secondary battery stands for 10 minutes. 3) Discharging is performed at a 0.33C constant current to a lower limit cut-off voltage. At this time, a discharged capacity is recorded as a capacity of the secondary battery. A voltage corresponding to half of the discharged capacity is the nominal voltage. Relevant terms and test methods refer to GB/T 19596, GB/T 31484-2015, GB/T 31485-2015, GB/T 31486-2015 and Safety Requirements for Power Battery for Electric Vehicles. The test can be performed using an apparatus known in the art, such as a battery cell charger/discharger and a high-temperature and low-temperature box.

### 3. 25°C power@10%SOC test method of lithium ion battery

A power performance of an assembled battery is tested at a specified temperature and a specified SOC by using the battery charger/discharger + the high- and low- temperature box. Refer to GB/T 19596 and GB/T 31486 for related terms and test methods.

### 4. Discharge capacity test of secondary battery

At 25 °C, the secondary battery stands for 30 minutes, then is discharged with a 0.33C constant current to the lower limit cut-off voltage, stands for 5 minutes, then is charged with the 0.33C constant current to the upper limit cut-off voltage, then is charged with a constant voltage to the current <0.05C, stands for 5 minutes, and then is discharged with the 0.33C constant current to the lower cut-off voltage. The discharge capacity, i.e., an initial discharge capacity C₀, is recorded at this time.

The discharge current of the secondary battery is updated to 2 C according to the above method. The discharge capacity Cₙ is recorded. The 2C discharge capacity of the secondary battery is Cₙ/C₀ × 100%. The discharge capacity of other multiplicity rates is obtained by the same method.

### 5. Test method of particle diameter

A Malvern 3000 laser particle diameter apparatus starts and is warmed up for 30 minutes. A hydro2000sm small feed tower is connected to a laser particle diameter instrument. An appropriate amount of pure water is added into a feeder. A stirrer starts, is rotated at a speed up to 3000 rpm, cleaned for 3 to 5 seconds, and repeatedly cleaned for ≥ 3 times. After cleaning is complete, an appropriate amount of pure water is added into a pool. After air bubbles are excluded, the stirrer is uniformly adjusted to a speed up to 3000 rpm. The rotation speed of the stirrer is adjusted to the highest speed, is then zeroed, and waits for 3-5 seconds. These operations are repeated for ≥ 2 times. 30 ml of ultrapure water is added into a 50 ml beaker to be fully mixed with 6 g of samples, placed in an ultrasonic instrument and dispersed for 5 minutes at an ultrasonic power of 60 W for a measurement time of 6 seconds. The shading degree is set to 8% to 12%. Measurement is carried out for 3 times. The last data is taken as the particle diameter of the material.

### 6. Inductively coupled plasma technology (ICP) for testing content of Ni and Co in ternary material

10 ml aqua regia is added into the dry positive electrode plate of about 0.4 g, then placed on an electrical hot plate and heated up to 180 °C, and stands for 30 minutes. The positive electrode plate is melted and cooled down to a room temperature, and then transferred to a 100 ml volumetric flask. A volume is then fixed. 1 ml of a sample is diluted to 100 ml. An ICP test is carried out to obtain the content of Ni and Co elements.

### Screening of quantities of first and the second battery cells and gram capacity of electrode plates in battery

The parameters of the batteries in Embodiments 1 to 13 and Comparative Embodiments 1 and 2 are shown in Table 1 (To be continued). The ternary material in Embodiments and Comparative Embodiments is LiNi_{0.5}Co_{0.2}Mn_{0.3}O₂. The second positive electrode material is LiFe_{0.5}Mn_{0.5}PO₄. The performance test results of the batteries in Embodiments 1 to 13 and Comparative Embodiments 1 and 2 are shown in Table 2:

**Table 1 (To be continued)**

| | Comparative Embodiment 1 | Comparative Embodiment 2 | Embodiment 1 | Embodiment 2 | | Embodiment 3 | | Embodiment 4 | |
|---|---|---|---|---|---|---|---|---|---|
| Total quantity of the battery cells | 10 | 10 | 10 | 10 | | 10 | | 10 | |
| a/mA·h/g | 190 | 190 | 190 | 190 | | 190 | | 190 | |
| b/mA·h/g | 140 | 140 | 140 | 140 | | 140 | | 140 | |
| x2/x1 | / | 0.0 | 9.0 | 4.0 | | 2.3 | | 1.5 | |
| (b/a)² | 0.5 | 0.5 | 0.5 | 0.5 | | 0.5 | | 0.5 | |
| (b/a)²x2/x1 | / | 0.00 | 4.89 | 2.17 | | 1.27 | | 0.81 | |
| x1 | 0 | 10 | 1 | 2 | | 3 | | 4 | |
| x2 | 10 | 0 | 9 | 8 | | 7 | | 6 | |
| Energy density of the first battery cell /Wh/kg | / | 240 | 240 | 240 | | 240 | | 240 | |
| Energy density of second battery cells /Wh/kg | 160 | 0 | 160 | 160 | | 160 | | 160 | |

**Table 1 (Continued)**

| | Embodiment 5 | Embodiment 6 | Embodiment 7 | Embodiment 8 | Embodiment 9 | Embodiment 10 | Embodiment 11 | Embodiment 12 | Embodiment 13 |
|---|---|---|---|---|---|---|---|---|---|
| Total quantity of the battery cells | 10 | 10 | 10 | 10 | 10 | 10 | 10 | 10 | 10 |
| a/mA·h/g | 190 | 190 | 190 | 190 | 190 | 150 | 130 | 190 | 190 |
| b/mA·h/g | 140 | 140 | 140 | 140 | 140 | 140 | 140 | 100 | 160 |
| x2/x1 | 1.0 | 0.7 | 0.4 | 0.3 | 0.1 | 1.0 | 1.0 | 1.0 | 1.0 |
| (b/a)² | 0.5 | 0.5 | 0.5 | 0.5 | 0.5 | 0.9 | 0.4 | 0.3 | 0.7 |
| (b/a)²x2/x1 | 0.54 | 0.36 | 0.23 | 0.14 | 0.06 | 0.87 | 0.37 | 0.28 | 0.71 |
| x1 | 5 | 6 | 7 | 8 | 9 | 5 | 5 | 5 | 5 |
| x2 | 5 | 4 | 3 | 2 | 1 | 5 | 5 | 5 | 5 |
| Energy density of the first battery cell /Wh/kg | 240 | 240 | 240 | 240 | 240 | 189 | 291 | 240 | 240 |
| Energy density of second battery cells /Wh/kg | 160 | 160 | 160 | 160 | 160 | 160 | 160 | 114 | 183 |

**Table 2**

| | Energy density of the battery /Wh/kg | 10% SOC power capability of the battery at 25 °C | Failure temperature of the hot box /°C |
|---|---|---|---|
| Comparative Embodiment 1 | 160 | 1298 | 230 |
| Comparative Embodiment 2 | 240 | 476 | 150 |
| Embodiment 1 | 168 | 1375 | 183 |
| Embodiment 2 | 176 | 1444 | 180 |
| Embodiment 3 | 184 | 1436 | 178 |
| Embodiment 4 | 192 | 1438 | 176 |
| Embodiment 5 | 200 | 1361 | 173 |
| Embodiment 6 | 208 | 1223 | 170 |
| Embodiment 7 | 216 | 964 | 166 |
| Embodiment 8 | 224 | 791 | 161 |
| Embodiment 9 | 232 | 569 | 156 |
| Embodiment 10 | 175 | 817 | 195 |
| Embodiment 11 | 225 | 871 | 133 |
| Embodiment 12 | 177 | 953 | 185 |
| Embodiment 13 | 211 | 968 | 151 |

As can be seen from Table 2, with reference to Comparative Embodiment 2, when the battery only includes the first battery cells, the battery has a higher energy density. The battery has lower 10% SOC power capacity at 25 °C. The hot box has a lower failure temperature. With reference to Comparative Embodiment 1, when the battery only includes the second battery cells, the battery has a lower energy density. The battery has higher 10% SOC power capacity at 25 °C. The hot box has a higher failure temperature. With reference to Embodiments 1 to 13, when the battery includes both the first battery cells and the second battery cells, the energy density of the battery, the 10% SOC power capability of the battery at 25 °C, and the hot box's failure temperature of the battery can be optimized at the same time. With reference to Embodiments 2 to 8, when a ratio of the quantity of the second battery cells to the quantity of the first battery cells of the battery is 0.25 to 4, the battery has better overall performance, while the energy density is ensured, the battery has higher 10% SOC at 25 °C, and the failure temperature of the hot box can be increased accordingly. With reference to Embodiment 5, when a ratio of the quantity of the second battery cells to the quantity of the first battery cells is 1, the battery has the best overall performance.

### Screening of particle diameter when second positive electrode material is secondary particles

The parameters of the batteries in Embodiments 14 to 19 and the test results are shown in Tables 3 and 4:

**Table 3**

| | Embodiment 14 | Embodiment 15 | Embodiment 16 | Embodiment 17 | Embodiment 18 | Embodiment 19 |
|---|---|---|---|---|---|---|
| First positive electrode material | LiNi_{0.5}Co_{0.2}Mn_{0.3}O₂ | | | | | |
| Second positive electrode material | LiFe_{0.5}Mn_{0.5}PO₄ | | | | | |
| Total quantity of the battery cells | 10 | 10 | 10 | 10 | 10 | 10 |
| Quantity of first battery cells | 5 | 5 | 5 | 5 | 5 | 5 |
| Quantity of second battery cells | 5 | 5 | 5 | 5 | 5 | 5 |
| Energy density of the first battery cell /Wh/kg | 240 | 240 | 240 | 240 | 240 | 240 |
| Energy density of second battery cells /Wh/kg | 157 | 157 | 157 | 157 | 157 | 157 |

**Table 4**

| | Dᵥ50/µm | Powder Compaction Density 3T/g/cm³ | Gram capacity mA·h/g | 2C discharge capacity |
|---|---|---|---|---|
| Embodiment 14 | 0.2 | 2.27 | 148 | 89% |
| Embodiment 15 | 1 | 2.19 | 151 | 87% |
| Embodiment 16 | 2 | 2.05 | 153 | 85% |
| Embodiment 17 | 3 | 2.01 | 154 | 84% |
| Embodiment 18 | 4 | 1.95 | 156 | 82% |
| Embodiment 19 | 10 | 1.78 | 160 | 77% |

As can be seen from the above tables, when the particle diameter of the second positive electrode material gradually increases, the 2C discharge capacity of the battery shows a decreasing trend. When the particle diameter of the second positive electrode material is 10 µm, the 2C discharge capacity of the battery is the lowest. It indicates that the second positive electrode material has a smaller particle diameter, which is conducive to shortening the lithium ion diffusion path and the bulk phase diffusion impedance of the second positive electrode material, and improving the energy density of the battery.

### Screening of mass percentage of Ni and Co in ternary material

The parameters of the batteries in Embodiments 20 to 28 and the test results are shown in Tables 5 to 7:

**Table 5**

| | First positive electrode material | Second positive electrode material |
|---|---|---|
| Embodiment 20 | LiNi_{0.3}CO_{0.3}Mn_{0.4}O₂ | LiFe_{0.5}Mn_{0.5}PO₄ |
| Embodiment 21 | LiNi_{0.5}CO_{0.1}Mn_{0.4}O₂ | LiFe_{0.5}Mn_{0.5}PO₄ |
| Embodiment 22 | LiNi_{0.82}Co_{0.1}Mn_{0.08}O₂ | LiFe_{0.5}Mn_{0.5}PO₄ |
| Embodiment 23 | LiNi_{0.3}Co_{0.1}Mn_{0.6}O₂ | LiFe_{0.5}Mn_{0.5}PO₄ |
| Embodiment 24 | LiNi_{0.3}Co_{0.5}Mn_{0.2}O₂ | LiFe_{0.5}Mn_{0.5}PO₄ |
| Embodiment 25 | LiNi_{0.3}Co_{0.02}Mn_{0.6}O₂ | LiFe_{0.5}Mn_{0.5}PO₄ |
| Embodiment 26 | LiNi_{0.3}Co_{0.6}Mn_{0.1}O₂ | LiFe_{0.5}Mn_{0.5}PO₄ |
| Embodiment 27 | LiNi_{0.2}Co_{0.3}Mn_{0.5}O₂ | LiFe_{0.5}Mn_{0.5}PO₄ |
| Embodiment 28 | LiNi_{0.995}Co_{0.002}Mn_{0.002}O₂ | LiFe_{0.5}Mn_{0.5}PO₄ |

**Table 6**

| | Embodiment 20 | Embodiment 21 | Embodiment 22 | Embodiment 23 | Embodiment 24 | Embodiment 25 | Embodiment 26 | Embodiment 27 | Embodiment 28 |
|---|---|---|---|---|---|---|---|---|---|
| Total quantity of the battery cells | 10 | 10 | 10 | 10 | 10 | 10 | 10 | 10 | 10 |
| Quantity of first battery cells | 5 | 5 | 5 | 5 | 5 | 5 | 5 | 5 | 5 |

| | | | | | | | | | |
|---|---|---|---|---|---|---|---|---|---|
| Quantity of second battery cells | 5 | 5 | 5 | 5 | 5 | 5 | 5 | 5 | 5 |
| Energy density of the first battery cell /Wh/kg | 123 | 135 | 162 | 119 | 125 | 103 | 127 | 119 | 186 |
| Energy density of second battery cells /Wh/kg | 160 | 160 | 160 | 160 | 160 | 160 | 160 | 160 | 160 |

**Table 7**

| | Mass percentage of Ni | Mass percentage of Co | Gram capacity mA·h/g | 2C discharge capacity |
|---|---|---|---|---|
| Embodiment 20 | 30.00% | 30.00% | 155 | 85% |
| Embodiment 21 | 50.00% | 10.00% | 170 | 71% |
| Embodiment 22 | 82.00% | 10.00% | 205 | 65% |
| Embodiment 23 | 30.00% | 10.00% | 150 | 67% |
| Embodiment 24 | 30.00% | 50.00% | 158 | 88% |
| Embodiment 25 | 30.00% | 2.00% | 130 | 43% |
| Embodiment 26 | 30% | 60% | 160 | 55% |
| Embodiment 27 | 20% | 30% | 150 | 44% |
| Embodiment 28 | 99.5% | 0.2% | 235 | 30% |

As can be seen from Table 7, in Embodiments 20 to 24, the mass percentage of Ni is between 30% and 99.5%. The mass percentage of Co is between 3% and 50%. The 2C discharge capacity of the battery is greater than 65%. As can be seen from Embodiments 25 to 28, when the mass percentage of Co and the mass percentage of Ni are not within the above ranges, the 2C discharge capacity of the battery is reduced.

### Screening of particle diameter when first positive electrode material is monocrystalline

The parameters of the batteries in Embodiments 29 to 36 and the test results are shown in Tables 8 and 9:

**Table 8**

| | Embodiment 29 | Embodiment 30 | Embodiment 31 | Embodiment 32 | Embodiment 33 | Embodiment 34 | Embodiment 35 | Embodiment 36 |
|---|---|---|---|---|---|---|---|---|
| First positive electrode material | LiNi_{0.5}Co_{0.2}Mn_{0.3}O₂ | | | | | | | |
| Second positive electrode material | LiFe_{0.5}Mn_{0.5}PO₄ | | | | | | | |
| Total quantity of the battery cells | 10 | 10 | 10 | 10 | 10 | 10 | 10 | 10 |
| Quantity of first battery cells | 5 | 5 | 5 | 5 | 5 | 5 | 5 | 5 |
| Quantity of second battery cells | 5 | 5 | 5 | 5 | 5 | 5 | 5 | 5 |
| Energy density of the first battery cell /Wh/kg | 243 | 248 | 251 | 253 | 256 | 263 | 241 | 259 |
| Energy density of second battery cells /Wh/kg | 160 | 160 | 160 | 160 | 160 | 160 | 160 | 160 |

**Table 9**

| | First positive electrode material Dᵥ50/µm | Powder Compaction Density 3T/g /cm³ | Gram capacity mA·h/g | 2C discharge capacity |
|---|---|---|---|---|
| Embodiment 29 | 0.2 | 3.405 | 192.4 | 92% |
| Embodiment 30 | 1 | 3.285 | 196.3 | 89% |
| Embodiment 31 | 2 | 3.075 | 198.9 | 87% |
| Embodiment 32 | 3 | 3.015 | 200.2 | 86% |
| Embodiment 33 | 4 | 2.925 | 202.8 | 83% |
| Embodiment 34 | 10 | 2.67 | 208 | 77% |
| Embodiment 35 | 0.05 | 3.42 | 189 | 75% |
| Embodiment 36 | 18 | 2.55 | 205 | 62% |

As can be seen from Table 8, when the first positive electrode material is the monocrystalline and the Dv50 is between 0.2 and 10 µm, the 2C discharge capacity of the battery is greater than 77%. As can be seen from Embodiment 35 and Embodiment 36, when Dv50 is less than 0.2 µm, or greater than 10 µm, the 2C discharge capacity of the battery is slightly reduced.

### Screening of particle diameter when first positive electrode material is secondary particles

The parameters of the battery in Embodiments 37 to 42 and the test results are shown in Tables 10 and 11:

**Table 10**

| | Embodiment 37 | Embodiment 38 | Embodiment 39 | Embodiment 40 | Comparative Embodiment 41 | Comparative Embodiment 42 |
|---|---|---|---|---|---|---|
| First positive electrode material | LiNi_{0.5}Co_{0.2}Mn_{0.3}O₂ | | | | | |
| Second positive electrode material | LiFe_{0.5}Mn_{0.5}PO₄ | | | | | |
| Total quantity of the battery cells | 10 | 10 | 10 | 10 | 10 | 10 |
| Quantity of first battery cells | 5 | 5 | 5 | 5 | 5 | 5 |
| Quantity of second battery cells | 5 | 5 | 5 | 5 | 5 | 5 |
| Energy density of the first battery cell /Wh/kg | 256 | 261 | 265 | 268 | 269 | 253 |
| Energy density of second battery cells /Wh/kg | 160 | 160 | 160 | 160 | 160 | 160 |

**Table 11**

| | First positive electrode material Dᵥ50/µm | Powder Compaction Density 3T/g /cm³ | Gram capacity mA·h/g | 2C discharge capacity |
|---|---|---|---|---|
| Embodiment 37 | 4 | 3.53 | 203 | 97% |
| Embodiment 38 | 8 | 3.56 | 207 | 95% |
| Embodiment 39 | 10 | 3.57 | 210 | 94% |
| Embodiment 40 | 12 | 3.61 | 212 | 93% |
| Embodiment 41 | 15 | 3.65 | 213 | 72% |
| Embodiment 42 | 2 | 3.5 | 200 | 90% |

As can be seen from Table 10, when the first positive electrode material is the secondary particles, and Dv50 is between 4 µm and 13 µm, the 2C discharge capacity of the battery is greater than 93%. As can be seen from Embodiment 41 and Embodiment 42, when Dv50 is 15 µm, the 2C discharge capacity of the battery decreases significantly; and when Dv50 is less than 4 µm, the 2C discharge capacity of the battery decreases slightly.

### Screening of particle diameter when second positive electrode material is monocrystalline

The parameters of the batteries in Embodiments 43 to 47 and the test results are shown in Tables 12 and 13:

**Table 12**

| | Embodiment 43 | Embodiment 44 | Embodiment 45 | Embodiment 46 | Embodiment 47 |
|---|---|---|---|---|---|
| First positive electrode material | LiNi_{0.5}Co_{0.2}Mn_{0.3}O₂ | | | | |
| Second positive electrode material | LiFe_{0.5}Mn_{0.5}PO₄ | | | | |
| Total quantity of the battery cells | 10 | 10 | 10 | 10 | 10 |
| Quantity of first battery cells | 5 | 5 | 5 | 5 | 5 |
| Quantity of second battery cells | 5 | 5 | 5 | 5 | 5 |
| Energy density of the first battery cell /Wh/kg | 240 | 240 | 240 | 240 | 240 |
| Energy density of second battery cells /Wh/kg | 152 | 155 | 160 | 165 | 171 |

**Table 13**

| | Second positive electrode material Dᵥ50/µm | Powder Compaction Density 3T/g/cm³ | Gram capacity mA·h/g | 2C discharge capacity |
|---|---|---|---|---|
| Embodiment 43 | 0.2 | 2.27 | 133 | 79% |
| Embodiment 44 | 0.3 | 2.05 | 136 | 77% |
| Embodiment 45 | 0.5 | 1.95 | 140 | 75% |
| Embodiment 46 | 0.8 | 1.85 | 145 | 70% |
| Embodiment 47 | 2 | 1.7 | 150 | 65% |

As can be seen from Table 13, the 2C discharge capacity of the battery formed when the particle diameter of the second positive electrode material is less than 1 µm is superior to the 2C discharge capacity of the battery formed when the second positive electrode material is greater than 1µm.

In the description of the present application, it should be understood that orientations or position relationships indicated by terms such as "center", "longitudinal", "lateral", "length", "width", "thickness", "above", "under", "front", "rear", "left", "right", "vertical", "horizontal", "top", "bottom", "inner", "outer", "clockwise", "counterclockwise", "axial", "radial", and "circumferential" are based on the orientations or position relationships shown in the drawings, are merely intended to describe the present application and simplify the descriptions, but are not intended to indicate or imply that the indicated device or element shall have a specific orientation or be formed and operated in a specific orientation, and therefore cannot be understood as a limitation to the present application.

In addition, the terms "first" and "second" are used merely for descriptive purposes but are not to be construed as indicating or implying relative importance or implicitly specifying the quantity of technical features indicated. Therefore, a feature defined with first" or "second" may explicitly or implicitly include one or more of the features. In the description of the present application, unless otherwise expressly and specifically defined, "a plurality of" means two or more.

In the present application, unless otherwise expressly specified or defined, the terms such as "mount", "concatenate", "connect" and "fix" shall be understood broadly, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art may understand specific meaning of the above terms in the present application based on specific circumstances.

In the present application, unless otherwise clearly specified and defined, a first feature being "above" or "under" a second feature may be that the first feature and the second feature are in direct contact, or the first feature and the second feature are in indirect contact through an intermediate medium. Moreover, that a first feature being "above", "over", and "on" a second feature may be that the first feature is right above or not right above the second feature, or may merely indicate that a horizontal height of the first feature is greater than that of the second feature A first feature being "below", "underneath", and "under" a second feature may be that the first feature is right below or not right below the second feature, or may merely indicate that a horizontal height of the first feature is less than that of the second feature.

In the description of this specification, the description with reference to the terms "one embodiment", "some embodiments", "example", "a specific example", or "some examples" means that the specific feature, structure, material, or characteristic described in combination with the embodiment or example is included in at least one embodiment or example of the present application. In this specification, the schematic representation of the forgoing terms does not necessarily refer to the same embodiment or example. Moreover, the described specific features, structures, materials or characteristics can be combined in any one or more embodiments or examples in a suitable manner. In addition, the person skilled in the art can combine the different embodiments or examples and the features of the different embodiments or examples described in this specification without contradicting each other.

Although the embodiments of the present application have been shown and described above, it can be understood that the forgoing embodiments are exemplary and should not be construed as limiting the present application. A person of ordinary skill in the art can make changes, modifications, substitutions, and variations for the foregoing embodiments within the scope of the present application.

## Claims

1. A battery, comprising:
a first battery cell, the first battery cell comprising a first positive electrode plate, the first positive electrode plate comprising a first positive active layer, and the first positive active layer comprising a first positive electrode material; and
a second battery cell, the second battery cell comprising a second positive electrode plate, the second positive electrode plate comprising a second positive active layer, and the second positive active layer comprising a second positive electrode material, wherein
the first battery cell and the second battery cell are connected in parallel; and
the first positive electrode material comprises a ternary material, and the second positive electrode material comprises a lithium-containing phosphate.

2. The battery according to claim 1, wherein a quantity of first battery cells is x1, a quantity of second battery cells is x2, the first positive electrode plate of each of the first battery cells has a gram capacity of a mA-h/g, the second positive electrode plate of each of the second battery cells has a gram capacity of b mA·h/g, and 0.1 ≤ (b/a)²(x2/x1) ≤ 10 is satisfied.

3. The battery according to any one of claims 1 to 2, wherein 0.1 ≤ x1/x2 ≤ 10.

4. The battery according to any one of claims 1 to 3, wherein 150 mA-h/g ≤ a ≤ 230 mA-h/g; and/or 100 mA-h/g ≤ b ≤ 160 mA-h/g.

5. The battery according to any one of claims 1 to 4, wherein the lithium-containing phosphate comprises Liₐ₁A_{b1}MP_{1-c1}C_{c1}O_{4-d1}D_{d1}, A comprises one or more elements of IA group elements, M comprises at least one of a VIIB element and a dopant element of the VIIB element, C comprises one or more of a IIIA element, a IVA element, VA element and VIA element, D comprises one or more of a VIA element and a VIIA element, a1 is selected from a range of 0.9 to 1.1, b1 is selected from a range of 0 to 0.1, c1 is selected from a range of 0 to 0.1, and d1 is selected from a range of 0 to 0. 1.

6. The battery according to any one of claims 1 to 5, wherein the lithium-containing phosphate comprises Liₐ₁A_{b1}Mn₁₋ₑ₁Eₑ₁P_{1-c1}C_{c1}O_{4-d1}D_{d1}, A comprises one or more of Zn, Al, Na, K, Mg, Nb, Mo, and W, E comprises one or more of Zn, Al, Na, K, Mg, Mo, W, Ti, V, Zr, Fe, Ni, Mg, Co, Ga, Sn, Sb, Nb, and Ge, C comprises one or more of B (boron), S, Si, and N, D comprises one or more of S, F, Cl, and Br, a1 is selected from any value in a range of 0.9 to 1.1, b1 is selected from any value in a range of 0 to 0.100, c1 is selected from any value in a range of 0.001 to 0.100, d1 is selected from any value in a range of 0.001 to 0.1, and e1 is selected from any value in a range of 0.001 to 0.5.

7. The battery according to any one of claims 1 to 6, wherein the lithium-containing phosphate comprises Li₁₊ₓMn₁₋ₑ₁Eₑ₁P_{1-c1}C_{c1}O₄, 1 + x = a1, x is any value in a range of -0.100 to 0.100, e1 is any value in a range of 0.001 to 0.500, c1 is any value in a range of 0.001 to 0.100, E comprises one or more elements selected from Zn, Al, Na, K, Mg, Mo, W, Ti, V, Zr, Fe, Ni, Mg, Co, Ga, Sn, Sb, Nb, and Ge, and C comprises one or more elements selected from B (boron), S, Si, and N.

8. The battery according to any one of claims 1 to 7, wherein the second positive electrode material comprises an internal core and a case wrapping at least part of a surface of the internal core, and the internal core comprises the lithium-containing phosphate.

9. The battery according to any one of claims 1 to 8, wherein the ternary material is Liₐ₂Ni_{b2}Co_{c2}M1_{d2}M2ₑ₂O_{f2}R'_{g2}, 0.75 ≤ a2 ≤ 1.2, 0 < b2 < 1, 0 < c2 < 1, 0 < d2 < 1, 0 ≤ e2 ≤ 0.2, 1 ≤ f2 ≤ 2.5, 0 ≤ g2 ≤ 1, f2 + g2 ≤ 3, M1 comprises Mn and/or Al, M2 comprises at least one of Zr, Zn, Cu, Cr, Mg, Fe, V, Ti, Sr, Sb, Y, W, and Nb, and R' comprises at least one of N, F, S, and Cl.

10. The battery according to any one of claims 1 to 9, wherein the ternary material comprises at least one of a lithium nickel cobalt aluminum oxide and a lithium nickel cobalt manganese oxide.

11. The battery according to any one of claims 1 to 10, wherein based on total mass of the first positive electrode plate, by a mass percentage,
Ni is 30% to 99.5%; and
Co is 3% to 49.5%.

12. The battery according to any one of claims 1 to 11, wherein the ternary material is a monocrystalline, and the monocrystalline has a particle diameter of 0.2 µm ≤ Dᵥ50 ≤ 10 µm and Dᵥ99 ≤ 18 µm.

13. The battery according to any one of claims 1 to 12, wherein the ternary material is secondary particles formed by agglomeration of primary particles, the primary particles have a particle diameter of 50 nm to 800 nm, and the secondary particles have a particle diameter of 4 µm ≤ Dᵥ50 ≤ 13 µm and Dᵥ99 ≤ 30 µm.

14. The battery according to any one of claims 1 to 13, wherein the ternary material has a BET of 0.4 to 1.5 m²/g.

15. The battery according to any one of claims 1 to 14, wherein the second positive electrode material is a monocrystalline, and the second positive electrode material has a particle diameter of 50 nm to 1000 nm.

16. The battery according to any one of claims 1 to 15, wherein the second positive electrode material is secondary particles formed by agglomeration of primary particles, and the secondary particles have a particle diameter of 0.8 µm ≤ Dᵥ50 ≤ 4.2 µm and Dᵥ99 ≤ 30 µm.

17. The battery according to any one of claims 1 to 16, wherein the second positive electrode material has a BET of 8 to 20 m²/g.

18. An electrical device, comprising the battery according to any one of claims 1 to 17.
